# EUROPÄISCHE PATENTSCHRIFT

(11) **EP 2 188 594 B1**
(45) Veröffentlichungstag und Bekanntmachung des Hinweises auf die Patenterteilung: **29.11.2017**
(21) Anmeldenummer: 08785849.4
(22) Anmeldetag: 03.09.2008
(51) Int. Cl.: G01C 21/36, G01C 21/26

(54) **FAHRZEUGSYSTEM EINES KRAFTFAHRZEUGS MIT ERLÄUTERUNGSFUNKTION**
VEHICLE SYSTEM OF A MOTOR VEHICLE HAVING EXPLANATION FUNCTION
SYSTÈME DE VÉHICULE D'UN VÉHICULE AUTOMOBILE À FONCTION EXPLICATIVE

(30) Priorität: 12.09.2007 DE 102007043934
(43) Veröffentlichungstag der Anmeldung: 26.05.2010
(73) Patentinhaber: Volkswagen Aktiengesellschaft, 38440 Wolfsburg (DE)
(72) Erfinder: BERGHOLZ, Ralf, 38108 Braunschweig (DE); DAGINNUS, Michael, 38106 Braunschweig (DE); SCHWAB, Gabriel, 38440 Wolfsburg (DE); WU, Yongmei, 38108 Braunschweig (DE); WÄLLER, Christoph, 38102 Braunschweig (DE); BENDEWALD, Lennart, 38442 Wolfsburg (DE); BOHNENBERGER, Thorsten, 38122 Braunschweig (DE); LEMKE, Katja, 38124 Braunschweig (DE); ROX, Karl, 38446 Wolfsburg (DE); SCHULZ, Stefan, 13189 Berlin (DE); LILIENTHAL, Jörg, 38518 Gifhorn (DE)
(74) Vertreter: Obst, Bernhard
(86) Internationale Anmeldenummer: PCT/EP2008/007407
(87) Internationale Veröffentlichungsnummer: WO 2009/033647

(56) Entgegenhaltungen:
- EP-A- 1 749 688
- EP-A2- 1 385 099
- WO-A-2007/054284
- DE-A1- 19 959 755

## Beschreibung

Die Erfindung betrifft ein Fahrzeugsystem nach dem Oberbegriff des Patentanspruchs 1.

In Kraftfahrzeugen wird eine Vielzahl von unterschiedlichen Fahrzeugsystemen eingesetzt, die unterschiedliche Funktionalitäten bereitstellen. Ein Großteil dieser Fahrzeugsysteme wertet hierfür Nutzereingaben eines Nutzers, beispielsweise eines Fahrers oder Beifahrers, aus. In dem Maße, in dem die Anzahl der bereitgestellten Funktionalitäten zugenommen hat, hat auch eine Komplexität der einzelnen Fahrzeugsysteme und ihrer Bedienung zugenommen. Dies bedeutet, dass ein Fahrzeugsystem, je mehr Funktionen und Funktionalitäten es zur Verfügung stellt, schwieriger zu bedienen ist.

Ziel einer Entwicklung der Fahrzeugsysteme ist es zwar, diese so zu gestalten, dass eine Bedienung möglichst intuitiv durch den Nutzer möglich ist, jedoch ist bei Komfortsystemen in Kraftfahrzeugen, beispielsweise bei Navigationssystemen, Multimediasystemen usw., eine solche Gestaltung aufgrund der Vielzahl von möglichen Funktionen und/oder Funktionalitäten nicht möglich.

Daher ist es aus dem Stand der Technik bekannt, Bedienungsanleitungen zu verfassen, die die einzelnen Funktionen und Funktionalitäten sowie deren Bedienung beschreiben. Diese Bedienungsanleitungen, die in der Regel Erklärungsinformationen, die die Funktionalitäten und deren Bedienung beschreiben, für sämtliche in dem Fahrzeug verbaute Fahrzeugsysteme oder sogar für sämtliche potentiell in dem Fahrzeug verbaute Fahrzeugsysteme umfassen, geschaffen. Eine Bereitschaft der Nutzer von Kraftfahrzeugen, diese Bedienungsanleitungen, die in der Regel aus auf Papier gedruckten Heften bestehen, zu lesen und zu studieren, ist gering. Daher treten häufig Fehlbenutzungen und Fehlbedienungen der Fahrzeugsysteme auf. Andererseits werden eine Vielzahl von Funktionalitäten und Funktionen nicht oder nicht vollständig genutzt, da die Nutzer keine ausreichende Kenntnisse erlangen, um diese auszulösen, zu steuern und/oder zu bedienen.

Ein weiteres Problem besteht darin, dass die gedruckten Bedienungsanleitungen aufgrund ihres Umfangs nur schwierig zu aktualisieren sind. Häufig treten während des Herstellungsprozesses des Kraftfahrzeugs noch kleinere Modifikationen einzelner Fahrzeugsysteme auf, die in der gedruckten Bedienungsanleitung nicht berücksichtigt sind. Solche nach der Drucklegung der Bedienungsanleitung vorgenommenen Modifikationen an den Fahrzeugsystemen werden zwar zum Teil durch ein Zufügen von Korrekturblättern zu den Bedienungsanleitungen berücksichtigt, jedoch gehen solche losen Korrekturblätter leicht verloren und können im Index der Bedienungsanleitung nicht aufgefunden werden.

Aus der EP 1 749 688 A2 ist ein Informationssystem für ein Kraftfahrzeug bekannt, welches eine Datenvererbeitungsvorrichtung und eine Anzeigeeinrichtung zur Darstellung von gespeicherten Informationen umfasst, die mittels einer Bedieneinrichtung auswählbar und aus einer Speichereinrichtung auslesbar sind. Zur Erhöhung des Nutzerkomforts des Kraftfahrzeugs handelt es sich bei den Informationen um solche einer Bedienungsanleitung und bei Auswahl einer Information ist die entsprechende Einrichtung im Kraftfahrzeug aktiviert.

Aus der DE 199 59 752 A1 sind ein Verfahren und eine Vorrichtung zur Information über die Bedienung eines Kraftfahrzeuges bekannt, bei welchen nach Aktivierung einer Spracherkennungsvorrichtung und Eingabe von Sprachäußerungen abhängig von mit der Spracherkennungsvorrichtung erkannten Sprachkommandos, diesen Sprachkommandos zugeordnete Informationen mittels einer Sprachverarbeitungsvorrichtung ausgegeben werden. Dort ist vorgesehen, in einem vorgeschalteten Verfahren eine aktuelle Ausstattungsvariante des Kraftfahrzeugs zu ermitteln und abhängig von der ermittelten Ausstattungsvariante des Kraftfahrzeugs aus einer ersten Datenbank eine zweite Datenbank zu generieren und in einer Speichervorrichtung abzuspeichern, wobei die zweite Datenbank nur Informationen über die Bedienung für die aktuelle Ausstattungsvariante des Kraftfahrzeugs umfasst und wobei die den erkannten Sprachkommandos zugeordnete Informationen aus der zweiten Datenbank ausgelesen und mittels der Sprachausgabevorrichtung ausgegeben wird.

Aus der WO 2007/054234 A1 ist eine Informationseinrichtung in einem Kraftfahrzeug mit mindestens einer Ausgabeeinrichtung und einer Verarbeitungseinrichtung bekannt, der eine Speichereinrichtung zugeordnet ist, in welcher Fahrzeugdaten verschiedenster Art, insbesondere Daten von Fahrzeugfunktionen und/oder Fahrzeugelementen, deren Bedienung, Anzeige oder Handhabung und/oder Daten von Fahrzeugzuständen abgelegt sind, und ein Verfahren zur Information über die genannten Fahrzeugdaten beschrieben. Dort ist vorgesehen, die entsprechenden Fahrzeugdaten, insbesondere Fahrzeugfunktionen und deren Bedienung oder Handhabung und/oder Fahrzeugelemente und/oder deren Funktionen und/oder Handhabung und/oder Fahrzeugzustände und/oder deren Veränderung animiert auf der mindestens einen Ausgabeeinrichtung darzustellen.

Aus der EP 1 385 099 A2 ist ein System bekannt, welches Unterschiede von Benutzerhandbüchern abspeichert und bei Nutzeranforderung die den Unterschied ausmachenden Informationen ausgibt.

Der Erfindung liegt somit das technische Problem zugrunde, ein Fahrzeugsystem für ein Kraftfahrzeug zu schaffen, welches einem Nutzer eine korrekte und vollständige Nutzung der bereitgestellten Funktionalitäten erleichtert und/oder ermöglicht.

Die technische Aufgabe wird durch ein Fahrzeugsystem mit den Merkmalen des Patentanspruchs 1 gelöst. Weitere vorteilhafte Ausgestaltungen der Erfindung ergeben sich aus den Unteransprüchen.

Es wird ein Fahrzeugsystem eines Kraftfahrzeugs vorgeschlagen, welches gesteuert durch Steuerungseingaben Funktionalitäten in dem Kraftfahrzeug bereitstellt und eine Schnittstelle zum Erfassen der Steuerungseingaben und eine Steuereinrichtung zum Steuern der Funktionalitäten in Abhängigkeit der erfassten Steuerungseingaben umfasst. Die Schnittstelle oder eine weitere Schnittstelle sind zum Ausgeben von Informationen an einen oder mehrere Nutzer ausgebildet. Mit der Steuereinrichtung ist ein Speichermedium verknüpft, auf dem Erklärungsinformationen abgespeichert sind, die die Funktionalitäten und/oder eine Bedienung des Fahrzeugssystems erläutern, wobei die Steuereinrichtung ausgebildet ist, die Erklärungsinformationen aus dem Speichermedium abzurufen und über die Schnittstelle als Teil der Informationen auszugeben. Bei dem vorgeschlagenen Fahrzeugsystem wird erreicht, dass die Erklärungsinformationen für dieses Fahrzeugsystem auf einem Speichermedium des Fahrzeugsystems selbst abgelegt sind und von diesem abgerufen werden können. Somit ist es auf einfache Weise möglich, die Erklärungsinformationen bei einer möglicherweise während des laufenden Produktionsprozesses vorgenommenen Modifikation des Fahrzeugsystems mit zu berücksichtigen und in dem Speichermedium die korrekten Erklärungsinformationen abzulegen. Erklärungsinformationen können somit mittels des Fahrzeugsystems selbst abgerufen und ausgegeben werden.

Erfindungsgemäß ist vorgesehen, dass die Steuereinrichtung ausgebildet ist, bei der Inbetriebnahme des Fahrzeugs automatisch die Erklärungsinformationen abzurufen und auszugeben.

Hierdurch wird gewährleistet, dass dem Nutzer immer die notwendigen Erklärungsinformationen angeboten werden, um das Fahrzeugsystem bedienen zu können, auch wenn er dieses noch nicht kennt.

Bei einer Ausgestaltung der Erfindung ist vorgesehen, dass die Schnittstelle Bedienelemente zum Erfassen der Steuerungseingaben umfasst. Über die Bedienelemente kann somit das Fahrzeugsystem die Steuerungseingaben direkt von dem Nutzer erfassen. Hierüber ist eine direkte Steuerung des Fahrzeugsystems und indirekt das Abrufen und Wiedergeben der Erklärungsinformationen steuerbar.

Ebenso ist es vorteilhaft, wenn die Schnittstelle mindestens eine Ausgabeeinrichtung umfasst. Bei der Ausgabeeinrichtung kann es sich sowohl um eine optische als auch eine akustische und/oder haptische Ausgabeeinrichtung handeln. Alle Ausgabeeinrichtungen, die in einem Kraftfahrzeug vorkommen, können verwendet werden.

Bei anderen Ausführungsformen des Fahrzeugsystems ist es möglich, dass das Fahrzeugsystem über eine andere Vorrichtung bedient wird. Bei einer solchen Ausführungsform ist es vorteilhaft, wenn die Schnittstelle mit einer Multifunktionsanzeige- und Bedienvorrichtung gekoppelt ist. Diese kann sowohl zum Erfassen von Steuerungseingaben des Nutzers genutzt werden als auch zur Ausgabe der Erklärungsinformationen. Die Multifunktionsanzeige- und Bedienvorrichtung kann darüber hinaus mit weiteren Ausgabe- und Eingabemitteln gekoppelt sein, über die ein Erfassen von Steuerungseingaben und/oder ein Ausgeben der Erklärungsinformationen möglich ist.

Bei einer besonders bevorzugten Ausführungsform ist das Fahrzeugsystem in eine Multifunktionsanzeige- und Bedienvorrichtung integriert. Die Schnittstelle ist in einem solchen Fall eine interne Schnittstelle zu den Anzeige- und Bedieneinheiten der Multifunktionsanzeige- und Bedienvorrichtung.

Besonders vorteilhaft ist es, wenn die Multifunktionsanzeige- und Bedienvorrichtung eine Anzeigevorrichtung mit einer freiprogrammierbaren Anzeigefläche umfasst. Eine freiprogrammierbare Anzeigefläche ist eine Anzeigefläche, auf der unterschiedliche Inhalte programmgesteuert an derselben Stelle nacheinander dargestellt werden können. Bei einer freiprogrammierbaren Anzeigefläche ist es beispielsweise möglich, als Filmsequenz oder animierte Sequenz ausgestaltete Erklärungsinformationen für den Nutzer darzustellen.

Besonders vorteilhaft ist es, wenn die mindestens eine Ausgabeeinrichtung ein Audiosystem umfasst. Über dieses können akustische Informationen ausgegeben werden, die durch einen Nutzer im Kraftfahrzeug auf einfache Weise wahrgenommen werden können. Insbesondere, wenn Informationen während der Fahrt ausgegeben werden sollen, die das Fahrzeugsystem erläutern, ist es von Vorteil, wenn diese Informationen akustisch ausgegeben werden und der Fahrer nicht seinen Blick auf eine Anzeigevorrichtung richten muss. Vielmehr kann er das Verkehrsgeschehen visuell weiterverfolgen, während er die über das Audiosystem ausgegebenen Erklärungsinformationen zur Erläuterung des Fahrzeugsystems akustisch wahrnimmt.

Bevorzugt ist das Fahrzeugsystem so ausgestaltet, dass auf dem Speichermedium oder einem weiteren Speichermedium erläuterte Funktionalitäten markiert werden und bei Inbetriebnahme und/oder Auslösen einer der Funktionalitäten durch die Steuereinrichtung überprüft wird, ob diese Funktionalität bereits erläutert wurde, und, falls dies nicht der Fall ist, die entsprechenden Erklärungsinformationen aus dem Speichermedium abgerufen und ausgegeben werden und die entsprechende Funktionalität in dem Speichermedium oder dem weiteren Speichermedium als erläuterte Funktionalität markiert wird, und andernfalls die Ausgabe der Erklärungsinformationen unterbleibt. Bei einer solchen Ausführungsform, bei der eine Ausgabe der Erklärungsinformationen vorzugsweise mit der Inbetriebnahme des Fahrzeugsystems gestartet wird, ist sichergestellt, dass jede Fahrzeugfunktion, die der Nutzer noch nicht bedient hat, zunächst für ihn erläutert wird. Es kann ferner vorgesehen sein, dass Funktionalitäten, die in einer vorgegebenen Zeitspanne nicht genutzt werden, wieder als nicht erklärt markiert werden. Selten genutzte Informationen werden somit "sicherheitshalber" erneut erklärt. Die Erklärungsinformationen können Informationen umfassen, die das Ausgeben der und/oder ein Abrufen der Erklärungsinformationen erläutern. Dies bedeutet, dass dem Nutzer erklärt wird, wie er ein Abrufen der Erklärungsinformationen über Nutzereingaben, d.h. Steuerungseingaben, steuern kann.

Bei einer bevorzugten Ausführungsform ist das Speichermedium ein fest in das Fahrzeugsystem integriertes Speichermedium, beispielsweise eine Festplatte, ein Flashspeicher, eine fest installierte Speicherkarte usw. Bei anderen Ausführungsformen der Erfindung kann jedoch vorgesehen sein, dass das Speichermedium ein Wechselspeichermedium ist. Hierdurch ist ein Aktualisieren der Erklärungsinformationen jederzeit auf einfache Weise möglich, indem das Wechselspeichermedium ausgetauscht wird.

Als besonders vorteilhaft hat es sich erwiesen, dass die Schnittstelle und/oder die weitere Schnittstelle mehrere unterschiedlich modale Ausgabeeinrichtungen umfasst oder mit unterschiedlich modalen Ausgabeeinrichtungen gekoppelt ist, so dass die Erklärungsinformationen multimodal, beispielsweise optisch und akustisch, ausgegeben werden können. Die Erklärungsinformationen können somit beispielsweise als Filmsequenzen ausgebildet sein. Ebenso ist es möglich, animierte Objekte darzustellen. Ferner kann eine optische Darstellung durch eine akustische Ansage unterstützt werden. Beispielsweise sind Reaktionen, d.h. Veränderungen des Fahrzeugsystems, die sich bei einer normalen Bedienung ergeben, grafisch animiert darstellbar.

Als besonders vorteilhaft hat es sich erwiesen, die Erklärungsinformationen so auszubilden, dass eine künstlich animierte Person (Avatar) bei der Ausgabe der Erklärungsinformationen dargestellt wird. Die Verwendung einer künstlichen Person erleichtert es einem Nutzer, dargebrachte Erklärungen wahrzunehmen und aufzufassen. Die künstliche Person kann beispielsweise auf einzelne Bedienelemente bzw. naturgetreue oder nahezu naturgetreue Darstellungen der Bedienelemente des Fahrzeugsystems weisen, die zu dessen Betätigung und/oder Steuerung zu bedienen sind.

Nachfolgend wird die Erfindung anhand bevorzugter Ausführungsbeispiele näher erläutert. Hierbei zeigen:
- Fig. 1: eine schematische Darstellung eines Kraftfahrzeugs mit einem Fahrzeugsystem;
- Fig. 2: eine Ansicht einer Anzeigefläche eines Multifunktionsanzeige- und Bediengeräts, auf der eine Wiedergabe von Erklärungsinformationen dargestellt ist;
- Fig. 3: eine Ansicht einer Anzeigefläche, auf der Erklärungsinformationen dargestellt sind, die ein Abrufen von Erklärungsinformationen darstellen;
- Fig. 4: eine Ansicht einer Anzeigefläche, auf der eine Kopplung eines Mobiltelefons mit dem Kraftfahrzeug durch eine künstliche Person erläutert wird;

- Fig. 5: eine schematische Darstellung eines als Multifunktionsanzeige- und Bediengeräts ausgebildeten Fahrzeugsystems, bei der eine künstliche Person durch eine Zuwendung ihres Rückens zu dem Nutzer eine Inaktivität eines Erläuterungsmodus anzeigt; und
- Fig. 6: eine Ansicht des Fahrzeugsystems nach Fig. 5, bei dem die künstliche Person aktiv ist, um eine Funktionalität des Fahrzeugsystems zu erläutern.

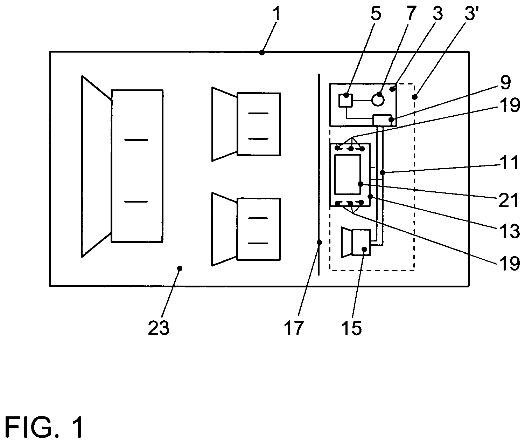

In Fig. 1 schematisch ein Kraftfahrzeug 1 dargestellt. Dieses umfasst mindestens ein Fahrzeugsystem 3. Das Fahrzeugsystem 3 stellt eine oder mehrere Funktionalitäten für das Kraftfahrzeug 1 bereit, beispielsweise Fahrzeugnavigationsfunktionalitäten. Die Fahrzeugnavigationsfunktionalitäten können beispielsweise eine zielgeführte Navigation des Kraftfahrzeugs umfassen, bei der Fahrtrichtungshinweise an den Fahrer ausgegeben werden. Befolgt der Fahrer diese Fahrtrichtungshinweise, so wird er zu einem zuvor festgelegten Zielpunkt mit dem Kraftfahrzeug geführt. Das Fahrzeugsystem kann selbstverständlich andere und/oder weitere Funktionalitäten bereitstellen.

Das Fahrzeugsystem 3 umfasst eine Steuereinrichtung 5, welche die einzelnen Funktionalitäten des Fahrzeugsystems 3 steuert. Mit der Steuereinrichtung 5 ist ein Speichermedium 7 verknüpft, auf dem Erklärungsinformationen abgelegt sind. Die Erklärungsinformationen umfassen Informationen zur Erläuterung der Funktionalitäten des Fahrzeugsystems und/oder dessen Bedienung. Die Erklärungsinformationen können Audiodaten und/oder Videodaten, Daten für Grafiken, für animierte Grafiken, für Text usw. umfassen. Das Fahrzeugsystem 3 umfasst ferner eine Schnittstelle 9, über die das Fahrzeugsystem, beispielsweise über einen Fahrzeugdatenbus 11, mit einer Multifunktionsanzeige- und Bedieneinrichtung 13 sowie einem Audiosystem 15 verbunden ist. Wesentlich ist, dass die Steuereinrichtung neben dem Bereitstellen der Erklärungsinformationen auch die Funktionalität der Fahrzeugsystems steuert.

Die Schnittstelle 9 kann bei anderen Ausführungsformen so ausgeführt sein, dass sie Bedienelemente zum Erfassen von Steuerungseingaben des Nutzers und/oder mindestens eine Ausgabeeinrichtung, beispielsweise eine Anzeigevorrichtung, ein Audiowiedergabesystem, eine Spracherkennungseinheit usw., umfassen.

Die Multifunktionsanzeige- und Bedienvorrichtung 13 ist vorzugsweise in eine Konsole 17 oder ein Armaturenbrett des Kraftfahrzeugs 1 integriert. Um Steuerungseingaben des Nutzers erfassen zu können, umfasst die Multifunktionsanzeige- und Bedienvorrichtung 13 Bedienelemente 19. Zum Ausgeben von Informationen umfasst die Multifunktionsanzeige- und Bedienvorrichtung 13 vorzugsweise eine Anzeigevorrichtung 21, die eine freiprogrammierbare Anzeigefläche, beispielsweise ein LCD-Display, welches farbig ausgestaltet sein kann, ein Plasmabildschirm oder ähnliches ist. Bei anderen Ausführungsformen kann die Anzeigevorrichtung auch eine Projektionsanzeigevorrichtung sein, bei der eine grafische Darstellung auf eine Anzeigefläche projiziert wird.

Ein in einem Innenraum 23 des Kraftfahrzeugs 1 befindlicher Nutzer (nicht dargestellt) kann die Bedienelemente 19 betätigen und hierüber Steuerungseingaben für das Fahrzeugsystem 3 vornehmen. Dieses stellt daraufhin seine Funktionalitäten zur Verfügung. Ist das Fahrzeugsystem beispielsweise ein Fahrzeugnavigationssystem, so gibt es beispielsweise einen Ausschnitt aus einer Landkarte wieder, der die Umgebung der aktuellen Kraftfahrzeugposition darstellt, sowie gegebenenfalls Fahrtrichtungshinweisinformationen, beispielsweise in Form von Pfeildarstellungen in dem Kartenausschnitt, die eine zielgeführte Navigation des Kraftfahrzeugs 1 in seiner Umgebung unterstützen.

Bei der beschriebenen Ausführungsform weist das Fahrzeugsystem keine eigenen Bedienelemente und/oder Ausgabevorrichtungen auf. Vielmehr sind diese über die Schnittstelle mit dem Fahrzeugsystem verbunden. Bei einer alternativen Ausführungsform kann das Fahrzeugsystem in eine Multifunktionsanzeige- und Bedienvorrichtung integriert sein, wie dies gestrichelt in Fig. 1 dargestellt ist. In einem solchen Falle stellen die Bedienelemente und die Anzeigevorrichtung eine Schnittstelle zum Erfassen von Steuerungseingaben und zum Ausgeben der Erklärungsinformationen dar. Selbstverständlich können auch andere Informationen, die im Rahmen des Bereitstellens der Funktionalitäten ausgegeben werden, über die Anzeigevorrichtung ausgegeben werden bzw. Steuerungseingaben zur Steuerung des Fahrzeugsystems über die Bedienelemente erfasst werden. Bei einer bevorzugten Ausführungsform ist die Multifunktionsanzeige- und Bedienvorrichtung 13 mit einer als Touchscreen ausgebildeten Anzeigevorrichtung versehen, die neben dem Ausgeben von Informationen eine Berührung und eine Berührposition eines Betätigungselements, beispielsweise eines Fingers, des Nutzers erfassen kann. Über eine Logik der als Touchscreen ausgebildeten Anzeigevorrichtung kann der Berührposition abhängig von den auf der Anzeigefläche dargestellten Informationen ein Steuerbefehl zugeordnet werden. Wünscht der Nutzer eine Erläuterung der Funktionalität und/oder der Bedienung, so kann er über eine Steuerungseingabe bewirken, dass ihm die in dem Fahrzeugsystem 3 in dem Speichermedium 7 gespeicherten Erklärungsinformationen ausgegeben werden.

Umfasst das Kraftfahrzeug mehrere Fahrzeugsysteme (nicht dargestellt), so können diese gemeinsam die Multifunktionsanzeige- und Bedienvorrichtung nutzen. Bei einer Ausführungsform der Erfindung kann vorgesehen sein, dass die Multifunktionsanzeige- und Bedienvorrichtung eine Funktionalität bereitstellt, die eine zentrale Steuerung zum Abrufen der Erklärungsinformationen von den einzelnen Fahrzeugsystemen bereitstellt. Hierüber ist es möglich, ein Bedienungsanleitungssystem für das gesamte Kraftfahrzeug zu schaffen, welches jeweils die Erklärungsinformationen aus den Fahrzeugsystemen bezieht, die tatsächlich in dem Kraftfahrzeug verbaut sind. Wird beispielsweise eine Komponente ausgetauscht, wo wird hierbei automatisch die Bedienungsanleitung für dieses Fahrzeugsystem mit ausgetauscht. Somit ist in dem Kraftfahrzeug immer eine aktuelle Anleitung mit Erklärungsinformationen abrufbar.

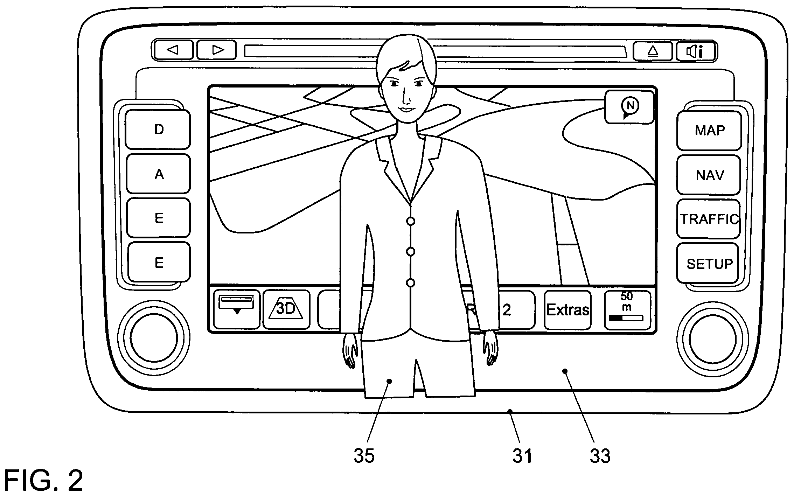

In Fig. 2 ist die Ansicht einer Anzeigefläche 31 einer Multifunktionsanzeige- und Bedienvorrichtung, beispielsweise der Multifunktionsanzeige- und Bedienvorrichtung 13 nach Fig. 1, dargestellt. Auf der Anzeigefläche 31 ist eine grafische Abbildung 33 der Multifunktionsanzeige- und Bedienvorrichtung dargestellt, die der Nutzer sieht, während eine Kartennavigation bereitgestellt wird. Zentral ist eine künstliche Person 35, die auch als Avatar bezeichnet wird, dargestellt. Diese Person erläutert durch Gesten die Bedienung der Multifunktionsanzeige- und Bedienvorrichtung. Zusätzlich umfassen die wiedergegebenen Erklärungsinformationen Audioinformationen, die synchronisiert mit der grafischen Darstellung der Abbildung 33 der Multifunktionsanzeige- und Bedienvorrichtung 33 und der künstlichen Person 35 über ein Audiosystem ausgegeben werden. Die künstliche Person 35 ist bevorzugt animiert dargestellt.

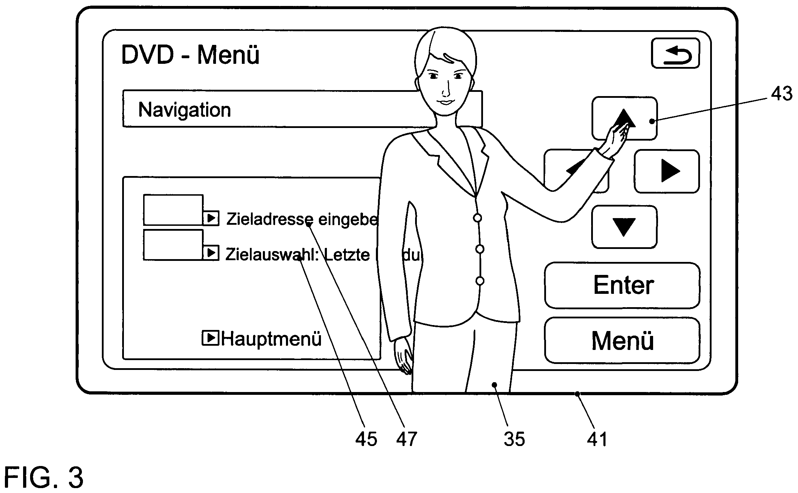

In Fig. 3 ist eine weitere Ansicht 41 der Anzeigefläche einer Multifunktionsanzeige- und Bedienvorrichtung dargestellt, auf der Erklärungsinformationen wiedergegeben werden, die eine Steuerung der Ausgabe von Erklärungsinformationen erläutern. Die künstliche Person 35 weist auf ein virtuelles Bedienelement 43, welches zu betätigen ist, um zwischen unterschiedlichen Menüpunkten 45, 47 zu wechseln, die unterschiedliche Themen und/oder Funktionalitäten angeben, über die Erklärungsinformationen ausgegeben werden können.

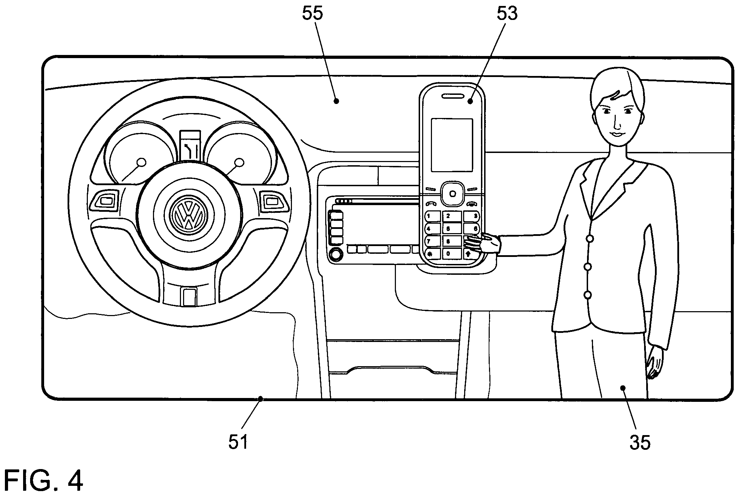

In Fig. 4 ist eine weitere Ansicht 51 einer Anzeigefläche einer Multifunktionsanzeige- und Bedienvorrichtung oder einer einfachen Anzeigevorrichtung dargestellt, auf der eine künstliche Person 35 ein Kopplungsprozess zwischen einem Mobiltelefon 53 und dem Kraftfahrzeug, dessen Cockpit 55 dargestellt ist, erläutert wird.

Es hat sich herausgestellt, dass ein Nutzer die Informationen besonders leicht erfassen kann, die durch die Erklärungsinformationen ausgegeben werden, wenn von ihm die künstliche Person, die mit den Erklärungsinformationen ausgegeben wird, als sympathisch empfunden wird. Daher ist bei einigen Ausführungsformen vorgesehen, dass eine Gestalt der künstlichen Person Nutzerabhängig ausgewählt werden kann. Die Erklärungsinformationen sind dann so ausgestaltet, dass die konkrete Ausgestaltung der grafisch dargestellten Informationen und/oder der akustisch ausgegebenen Informationen abhängig von dieser Festlegung erfolgt. Beispielsweise können männliche Nutzer eine Erläuterung durch eine männliche künstliche Person und Frauen eine Erläuterung durch eine weibliche künstliche Person bevorzugen.

Insbesondere wenn ein Spracherkennungssystem zur Erfassung von Steuerungseingaben verwendet wird, ist es vorteilhaft, wenn die künstliche Person einen natürlichen Namen trägt. Auch hier ist es wiederum für eine Akzeptanz des Systems von Vorteil, wenn der Nutzer den Namen der Person selbst festlegen kann. Eine Aktivierung der Erklärungsinformationen kann dann über ein Rufen des Namens, d.h. ein Aussprechen des Namens, zusammen mit einem Aufforderungssatz zum Auslösen einer Wiedergabe der Erklärungsfunktionen verwendet werden. Die Ausgabe von Erklärungsinformationen kann durch einen Nutzer beispielsweise durch ein Aussprechen des folgenden Satzes aktiviert werden: "Klaus, hilf mir bitte", wenn der Nutzer der künstlichen Person den Namen Klaus gegeben hat. Es ergibt sich, dass der künstlichen Person nahezu jeder Name durch den Nutzer zugeordnet werden kann.

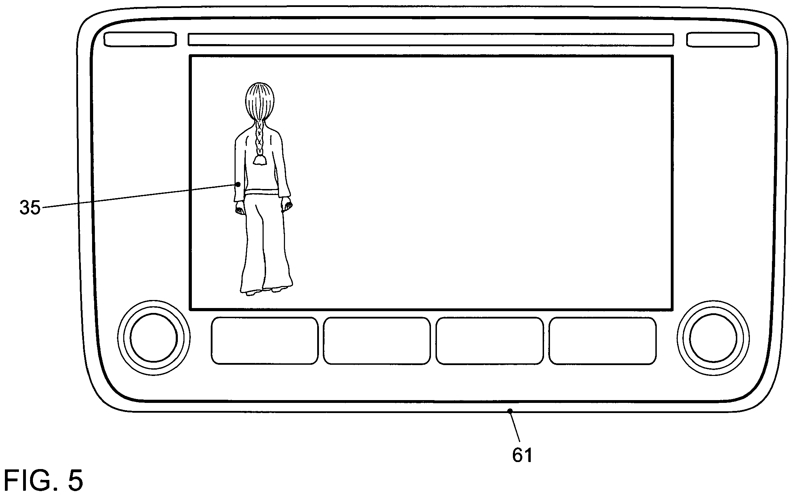

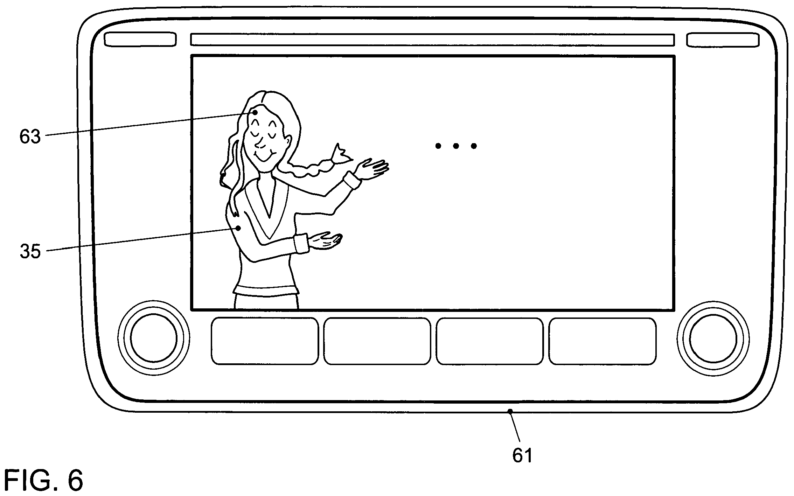

Um dem Nutzer anzudeuten, ob die künstliche Person aktiv oder inaktiv ist, ist bei einigen Ausführungsformen vorgesehen, dass die künstliche Person in einer von dem Nutzer abgewandten Stellung auf der Anzeigefläche dargestellt wird, wenn diese inaktiv ist. Dieses ist beispielsweise in Fig. 5 schematisch dargestellt, in der die Ansicht einer Multifunktionsanzeige- und Bedienvorrichtung 61 schematisch dargestellt ist. Die künstliche Person 35 hat dem Nutzer ihren Rücken zugewandt. Ist hingegen die künstliche Person 35 aktiv, so wendet sie dem Nutzer ihr Gesicht 63 zu. Dieses ist beispielsweise in Fig. 6 dargestellt. Es ergibt sich für den Fachmann, dass eine Inaktivität der künstlichen Person und somit eine Inaktivität einer Ausgabe und/oder Steuerung von Erklärungsinformationen auch dadurch angedeutet werden kann, dass die künstliche Person stark verkleinert und/oder seitlich abgewandt dargestellt ist. Bei einer vergrößerten und/oder zugewandten Darstellung wird dem Nutzer hingegen signalisiert, dass eine Ausgabe und/oder Steuerung von Erklärungsinformationen aktiv ist.

Die dargestellten Ausführungsformen sind lediglich beispielhaft und sollen nicht beschränkend ausgelegt werden.

### Bezugszeichenliste

- 1: Kraftfahrzeug
- 3: Kraftfahrzeugsystem
- 5: Steuereinrichtung
- 7: Speichermedium
- 9: Schnittstelle
- 11: Fahrzeugdatenbus
- 13: Multifunktionsanzeige- und Bedienvorrichtung
- 15: Audiosystem
- 17: Armaturenbrett
- 19: Bedienelement
- 21: Anzeigevorrichtung
- 23: Innenraum
- 31: Anzeigefläche einer Multifunktionsanzeige- und Bedienvorrichtung
- 33: Abbildung einer Multifunktionsanzeige- und Bedienvorrichtung
- 35: künstliche Person
- 41: Ansicht einer Anzeigefläche
- 43: virtuelles Bedienelement
- 45, 47: Menüpunkte
- 51: Ansicht einer Anzeigefläche
- 53: Mobiltelefon
- 55: Cockpit
- 61: Ansicht einer Multifunktionsanzeige- und Bedienvorrichtung
- 63: Gesicht

## Patentansprüche

1. Fahrzeugsystem (3) eines Kraftfahrzeugs (1), welches gesteuert durch Steuerungseingaben Funktionalitäten in dem Kraftfahrzeug (1) bereitstellt, umfassend eine Schnittstelle (9) zum Erfassen der Steuerungseingaben und eine Steuereinrichtung zum Steuern der Funktionalitäten in Abhängigkeit der erfassten Steuerungseingaben, und
ein Speichermedium, auf dem Erklärungsinformationen abgespeichert sind, die die Funktionalitäten und/oder eine Bedienung des Fahrzeugsystems (3) erläutern,
wobei
die Steuereinrichtung (5) mit dem Speichermedium (7) verknüpft ist, und wobei die Steuereinrichtung (5) ausgebildet ist, Erklärungsinformationen aus dem Speichermedium (7) abzurufen und über die Schnittstelle als Teil der Informationen auszugeben,
**dadurch gekennzeichnet, dass**
die Steuereinrichtung (5) ausgebildet ist, bei der Inbetriebnahme des Fahrzeugsystems (3) automatisch die Erklärungsinformationen abzurufen und auszugeben.

2. Fahrzeugsystem (3) nach einem der vorangehenden Ansprüche, **dadurch gekennzeichnet, dass** die Schnittstelle (9) Bedienelemente (19) zum Erfassen der Steuerungseingaben umfasst.

3. Fahrzeugsystem (3) nach einem der vorangehenden Ansprüche, **dadurch gekennzeichnet, dass** die Schnittstelle (9) mindestens eine Ausgabeeinrichtung (21) umfasst.

4. Fahrzeugsystem (3), nach Anspruch 3, **dadurch gekennzeichnet, dass** die mindestens eine Ausgabeeinrichtung ein Audiosystem umfasst.

5. Fahrzeugsystem (3) nach Anspruch 1 oder 2, **dadurch gekennzeichnet, dass** die Schnittstelle (9) mit einer Multifunktionsanzeige- und Bedienvorrichtung (13) koppelbar ist.

6. Fahrzeugsystem (3) nach einem der Ansprüche 1 bis 5, **dadurch gekennzeichnet, dass** das Fahrzeugsystem (3) in eine Multifunktionsanzeige- und Bedienvorrichtung (13) integrierbar ist, wobei die Schnittstelle (9) eine interne Schnittstelle zu der Multifunktionsanzeige- und Bedienvorrichtung (13) ist.

7. Fahrzeugsystem (3) nach einem der Ansprüche 1 bis 5, **dadurch gekennzeichnet, dass** das Fahrzeugsystem (3) in eine Multifunktionsanzeige- und Bedienvorrichtung mit einer eine frei programmierbare Anzeigefläche umfassenden Anzeigevorrichtung integrierbar ist.

8. Fahrzeugsystem (3) nach einem der vorangehenden Ansprüche, **dadurch gekennzeichnet, dass** das Ausgeben der Erklärungsinformationen über die Steuerungseingaben steuerbar ist.

9. Fahrzeugsystem (3) nach einem der vorangehenden Ansprüche, **dadurch gekennzeichnet, dass** auf dem Speichermedium oder einem weiteren Speichermedium erläuterte Funktionalitäten markiert sind, und die Steuereinrichtung derart ausgebildet ist, bei Inbetriebnahme und/oder Auslösen einer der Funktionalitäten zu überprüfen, ob die Funktionalität bereits erläutert wurde, und falls dieses nicht der Fall ist, die entsprechenden Erklärungsinformationen aus dem Speichermedium abzurufen und auszugeben und die entsprechende Funktionalität in dem Speichermedium oder dem weiteren Speichermedium als erläuterte Funktionalität zu markieren, und andernfalls eine Ausgabe von Erklärungsinformationen zu unterlassen.

10. Fahrzeugsystem (3) nach einem der vorangehenden Ansprüche, **dadurch gekennzeichnet, dass** die Erklärungsinformationen Informationen umfassen, die das Ausgeben der und/oder ein Abrufen der Erklärungsinformationen erläutern.

11. Fahrzeugsystem (3) nach einem der vorangehenden Ansprüche, **dadurch gekennzeichnet, dass** das Speichermedium ein Wechselspeichermedium ist.

12. Fahrzeugsystem (3) nach einem der vorangehenden Ansprüche, **dadurch gekennzeichnet, dass** die Schnittstelle und/oder eine weitere Schnittstelle zum Ausgeben von Informationen mehrere unterschiedlich modale Ausgabeeinrichtungen umfassen oder mit unterschiedlich modalen Ausgabeeinrichtungen koppelbar sind, so dass die Erklärungsinformationen multimodal, beispielsweise optisch und akustisch ausgegeben werden können.

13. Fahrzeugsystem (3) nach einem der vorangehenden Ansprüche, **dadurch gekennzeichnet, dass** die Erklärungsinformationen ausgebildet sind, eine künstliche animierte Person (35) (Avatar) bei der Ausgabe der Erklärungsinformationen darzustellen.

## Claims

1. Vehicle system (3) of a motor vehicle (1), which provides functionalities in the motor vehicle (1) under the control of control inputs, comprising an interface (9) for capturing the control inputs and a control device for controlling the functionalities on the basis of the captured control inputs, and
a storage medium that stores explanatory information that explains the functionalities and/or operator control of the vehicle system (3), wherein
the control device (5) is linked to the storage medium (7), and wherein the control device (5) is designed to retrieve explanatory information from the storage medium (7) and to output said explanatory information via the interface as part of the information,
**characterized in that**
the control device (5) is designed to automatically retrieve and output the explanatory information when the vehicle system (3) is started up.

2. Vehicle system (3) according to one of the preceding claims, **characterized in that** the interface (9) comprises operator control elements (19) for capturing the control inputs.

3. Vehicle system (3) according to one of the preceding claims, **characterized in that** the interface (9) comprises at least one output device (21).

4. Vehicle system (3) according to Claim 3, **characterized in that** the at least one output device comprises an audio system.

5. Vehicle system (3) according to Claim 1 or 2, **characterized in that** the interface (9) is coupleable to a multifunction display and operator control apparatus (13).

6. Vehicle system (3) according to one of Claims 1 to 5, **characterized in that** the vehicle system (3) is integrable into a multifunction display and operator control apparatus (13), wherein the interface (9) is an internal interface to the multifunction display and operator control apparatus (13).

7. Vehicle system (3) according to one of Claims 1 to 5, **characterized in that** the vehicle system (3) is integrable into a multifunction display and operator control apparatus with a display apparatus comprising a user-programmable display panel.

8. Vehicle system (3) according to one of the preceding claims, **characterized in that** the outputting of the explanatory information is controllable via the control inputs.

9. Vehicle system (3) according to one of the preceding claims, **characterized in that** explained functionalities are marked on the storage medium or a further storage medium, and the control device is designed to check, when one of the functionalities is started up and/or initiated, whether the functionality has already been explained, and if this is not the case, to retrieve and output the applicable explanatory information from the storage medium and to mark the applicable functionality as an explained functionality in the storage medium or the further storage medium, and otherwise not to output explanatory information.

10. Vehicle system (3) according to one of the preceding claims, **characterized in that** the explanatory information comprises information that explains the outputting of the explanatory information and/or retrieval of the explanatory information.

11. Vehicle system (3) according to one of the preceding claims, **characterized in that** the storage medium is a removable storage medium.

12. Vehicle system (3) according to one of the preceding claims, **characterized in that** the interface and/or a further interface for outputting information comprise(s) multiple output devices with different modality or is (are) coupleable to output devices with different modality, so that the explanatory information can be output multi-modally, for example visually and audibly.

13. Vehicle system (3) according to one of the preceding claims, **characterized in that** the explanatory information is designed to depict an artificial animated person (35) (avatar) when the explanatory information is output.

## Revendications

1. Système de véhicule (3) d'un véhicule automobile (1) qui fournit des fonctionnalités de manière commandée par des entrées de commande dans le véhicule automobile (1), comprenant une interface (9) permettant de détecter les entrées de commande et un dispositif de commande destiné à commander les fonctionnalités en fonction des entrées de commande détectées, et
un support de stockage sur lequel sont stockées des informations explicatives qui expliquent les fonctionnalités et/ou une façon de commander le système de véhicule (3), dans lequel
le dispositif de commande (5) est combiné au support de stockage (7) et dans lequel le dispositif de commande (5) est conçu pour faire appel à des informations explicatives provenant du support de stockage (7) et à les délivrer par l'intermédiaire de l'interface en tant que partie des informations,
**caractérisé en ce que** le dispositif de commande (5) est conçu pour appeler et délivrer automatiquement les informations explicatives lors de la mise en service du système de véhicule (3).

2. Système de véhicule (3) selon l'une quelconque des revendications précédentes, **caractérisé en ce que** l'interface (9) comporte des éléments de commande (19) destinés à détecter les entrées de commande.

3. Système de véhicule (3) selon l'une quelconque des revendications précédentes, **caractérisé en ce que** l'interface (9) comprend au moins un dispositif de sortie (21).

4. Système de véhicule (3) selon la revendication 3, **caractérisé en ce que** l'au moins un dispositif de sortie comprend un système audio.

5. Système de véhicule (3) selon la revendication 1 ou 2, **caractérisé en ce que** l'interface (9) peut être couplée à un moyen d'affichage et de commande multifonction (13).

6. Système de véhicule (3) selon l'une quelconque des revendications 1 à 5, **caractérisé en ce que** le système de véhicule (3) peut être intégré à un moyen d'affichage et de commande multifonction (13), dans lequel l'interface (9) est une interface interne du moyen d'affichage et de commande multifonction (13).

7. Système de véhicule (3) selon l'une quelconque des revendications 1 à 5, **caractérisé en ce que** le système de véhicule (3) peut être intégré à un moyen d'affichage et de commande multifonction comportant un moyen d'affichage comprenant une surface d'affichage programmable librement.

8. Système de véhicule (3) selon l'une quelconque des revendications précédentes, **caractérisé en ce que** la fourniture en sortie des informations explicatives peut être commandée par l'intermédiaire des entrées de commande.

9. Système de véhicule (3) selon l'une quelconque des revendications précédentes, **caractérisé en ce que** des fonctionnalités expliquées sont repérées sur le support de stockage ou sur un autre support de stockage et **en ce que** le dispositif de commande est réalisé, lors de la mise en service et/ou lors du déclenchement des fonctionnalités, de manière à vérifier si la fonctionnalité a déjà été expliquée et, dans le cas où cela n'a pas été le cas, à appeler et délivrer des informations explicatives correspondantes à partir du support de stockage et à repérer les fonctionnalités correspondantes dans le support de stockage ou l'autre support de stockage en tant que fonctionnalité expliquée, et dans le cas contraire, à omettre une fourniture en sortie d'informations explicatives.

10. Système de véhicule (3) selon l'une quelconque des revendications précédentes, **caractérisé en ce que** les informations explicatives comprennent des informations qui expliquent la fourniture en sortie et/ou un appel des informations explicatives.

11. Système de véhicule (3) selon l'une quelconque des revendications précédentes, **caractérisé en ce que** le support de stockage est un support de stockage amovible.

12. Système de véhicule (3) selon l'une quelconque des revendications précédentes, **caractérisé en ce que** l'interface et/ou une autre interface destinée à la fourniture en sortie d'informations comprennent plusieurs dispositifs de sortie modaux différents ou peuvent être couplées à différents dispositifs de sortie modaux afin que les informations explicatives puissent être délivrées de manière multimodale, par exemple de manière optique et acoustique.

13. Système de véhicule (3) selon l'une quelconque des revendications précédentes, **caractérisé en ce que** les informations explicatives sont conçues pour représenter une personne artificielle animée (35) (Avatar) lors de la fourniture en sortie des informations explicatives.
